# EUROPÄISCHE PATENTANMELDUNG

(11) **EP 0 866 532 A2**
(43) Veröffentlichungstag der Anmeldung: **23.09.1998**
(21) Anmeldenummer: 98100963.2
(22) Anmeldetag: 21.01.1998
(51) Int. Cl.: H02B 1/28

(54) **Gehäuse für eine elektrische Schaltung zum Einsatz in explosionsgefährdeten Bereichen**

(30) Priorität: 11.03.1997 DE 29704361 U
(71) Anmelder: Josef Heinrichs GmbH & Co. Messtechnik KG, 50933 Köln (DE)
(72) Erfinder: Lang, Michael, Dr., 50997 Köln (DE)
(74) Vertreter: Langmaack, Jürgen, Dipl.-Ing.

(57) **Zusammenfassung**

Die Erfindung betrifft ein Gehäuse für eine elektrische Schaltung zum Einsatz in explosionsgefährdeten Bereichen, das durch eine Zwischenwand in einen Elektronikraum und einen Klemmenraum unterteilt ist, mit einer lösbar dichten Abdeckung des Elektronikraums und einer lösbar dichten Abdeckung des Klemmenraums und mit einer der Zwischenwand zugeordneten druckfesten elektrischen Durchführung, die auf der Seite des Elektronikraums mit elektrischen Schaltungen und auf der Seite des Klemmenraums mit Klemmen und wenigstens einem Anschlußelement verbunden ist, wobei das Anschlußelement mit einem Anzeige- und/oder Bedienelement in Verbindung steht.

## Beschreibung

Die Erfindung betrifft ein Gehäuse für elektrische Schaltungen, das für den Einsatz in explosionsgefährdeten Bereichen zugelassen ist.

Elektrische Einrichtungen für explosionsgefährdete Bereiche unterliegen strengen Vorschriften sowohl hinsichtlich ihrer Konstruktion als auch hinsichtlich des Zuganges zu Zwecken der Überprüfung und/oder Wartung. Elektrische Einrichtungen sind beispielsweise Meßgeräte zur Erfassung von physikalischen Meßgrößen, wie etwa eine Durchflußmenge oder ein Füllstand. Derartige Meßgeräte bestehen aus einem Meßwertaufnehmer und einem Meßwertumformer, wobei der Meßwertumformer die meßwertverarbeitende Elektronik, beispielsweise in Form von Elektronikplatinen, die Spannungsversorgung, die Anschlußklemmen und ein Anzeige- und/oder Bedienelement enthalten kann. Der Meßwertumformer ist in einem Innenraum eines Gehäuses angeordnet, der so auszulegen ist, daS er ein Minimum an freiem Volumen aufweist, um den Explosionsschutz zu gewährleisten. Das freie Volumen kann auch durch Ausgießen mit Kunststoffen oder aber durch Auffüllen der Freiräume mit feinkörnigen Feststoffen, beispielsweise Sand, erheblich reduziert werden.

Bekannte Gehäuse sind derart konstruiert, daß sie aus einem Gehäusekörper und wenigstens einem Gehäuseinnenraum bestehen, der mit einem Deckel fest verschließbar ist. In dem Gehäuseinnenraum sind die elektrischen Schaltungen, beispielsweise Elektronikplatinen, und die Klemmen angeordnet. Der Nachteil dieses Aufbaues besteht darin, daß zur Überprüfung und/oder Wartung der Zugang zu den einzelnen Bauelementen nur beschränkt oder nur nach kompletter Demontage des Meßwertumformers möglich ist.

Bei einer weiteren Gehäusebauform wird durch eine Zwischenwand mit druckfester Durchführung für elektrische Leitungen der Gehäuseinnenraum in zwei voneinander dicht abgetrennte Räume, den Elektronikraum und den Klemmenraum unterteilt. Der eine Raum dient der Aufnahme der elektrischen Schaltungen, die über Anschlußelemente mit der druckfesten Durchführung verbunden sind. Weiterhin können mit den elektrischen Bauteilen Anzeige- und/oder Bedienelemente verbunden sein, die auch in diesem Raum angeordnet sind. In dem zweiten Raum sind Klemmen angeordnet, die mit den elektrischen Leitungen der druckfesten Durchführung verbunden sind. Der Klemmenraum und der Elektronikraum sind jeweils mit einer Abdeckung fest, aber lösbar verschlossen.

Nachteilig ist, daß das Öffnen des Gehäuses einer in einem explosionsgefährdeten Bereich angeordneten elektrischen Einrichtung in jedem Einzelfall einer besonderen Zulassung und der Einhaltung strenger Sicherheitsvorschriften bedarf. Das Öffnen des Elektronikraums kann beispielsweise notwendig sein, um die dort angeordneten Elektronikplatinen auszuwechseln oder zu überprüfen. Bei derartigen Wartungs- und Überprüfungsarbeiten besteht bei beiden bekannten Ausführungsformen das Problem, daß Verunreinigungen in Form von festen, flüssigen oder gasförmigen Stoffen in den druckfest gekapselten Elektronikraum gelangen können, wenn dieser im freien oder industriellen Umfeld geöffnet wird.

Es ist weiterhin üblich, die bekannten Gehäuse für elektrische Schaltungen mit einer Anzeige- und/oder Bedieneinheit zu versehen, die in dem Gehäuse angeordnet ist. Während die Anzeige durch ein Fenster abgelesen werden kann, ist es zur Bedienung der Schaltungen notwendig, die Abdeckung des Gehäuses zu lösen, wodurch wiederum Verunreinigungen in den Innenraum gelangen können. Zusätzlich ist es je nach Einbaulage des Gehäuses schwierig, die im Elektronikraum angeordneten Anzeigelemente abzulesen oder die Bedienelemente zu betätigen. Es ist außerdem notwendig, daß insbesondere die Bedienelemente vor der Betätigung durch Unbefugte geschützt werden.

Weiterhin weisen die bekannten Gehäuse den Nachteil auf, daß je nach Anwendungsfall oder aufgrund kundenspezifischer Wünsche ein unterschiedlich großer Gehäuseinnenraum zur Aufnahme der elektrischen Bauelemente, speziell der Elektronikplatinen, benötigt wird. Die bekannten Gehäuse sind daher häufig in ihrer Größe so ausgelegt, daß sich die Raumgröße zur Aufnahme der Bauelemente nach dem Anwendungsfall richtet, der den größten Raumbedarf erfordert. Wird eine Elektronik mit geringerem Raumbedarf verwendet so ist das Gehäuse überdimensioniert.

Der Erfindung liegt die Aufgabe zugrunde, ein Gehäuse für elektrische Schaltungen zum Einsatz in explosionsgefährdeten Bereichen zu schaffen, das eine einfache Ablesung der Meßwerte, eine leichte Bedienung des Meßgerätes, eine gute Zugänglichkeit zu den elektrischen Bauteilen und einen sicheren Schutz gegen unbefugte Bedienung gewährleistet, ohne daß der Elektronikraum geöffnet werden muß und somit das Eindringen von Verunreinigungen in das Gehäuse vermieden wird, wobei die Gehäusegröße auf den Anwendungsfall abstimmbar sein soll.

Diese Aufgabe wird gemäß der Erfindung gelöst durch ein Gehäuse für eine elektrische Schaltung zum Einsatz in explosionsgefährdeten Bereichen, das durch eine Zwischenwand in einen Elektronikraum und einen Klemmenraum unterteilt ist, mit einer lösbar dichten Abdeckung des Elektronikraums und einer lösbar dichten Abdeckung des Klemmenraums und mit einer der Zwischenwand zugeordneten druckfesten elektrischen Durchführung, die auf der Seite des Elektronikraums mit elektrischen Schaltungen und auf der Seite des Klemmenraums mit Klemmen und wenigstens einem Anschlußelement verbunden ist, wobei das Anschlußelement mit einer Anzeige- und/oder Bedieneinheit in Verbindung steht.

Der von dem Klemmraum dicht abgetrennte Elektronikraum, der beispielsweise in der Zündschutzart "druckfeste Kapselung" ausgelegt ist, dient der Aufnahme von Elektronikplatinen. Dadurch, daß das Gehäuse zweigeteilt ist und somit die Klemmen räumlich getrennt von den Elektronikplatinen angeordnet sind, besteht die Möglichkeit, die Elektronikplatinen zu überprüfen oder auszuwechseln, ohne vorher andere Bauelemente aus dem Gehäuseinneren entfernen zu müssen, die vor den Elektronikplatinen angeordnet wären. Weiterhin ist es vorteilhaft, wenn die Abdeckung des Elektronikraums mit einem Gehäusegrundkörper lösbar dicht verbunden ist, wobei die Abdeckung je nach Anwendungsfall unterschiedlich groß ausgeführt werden kann. Die Abdeckung des Elektronikraums kann beispielsweise als Haube ausgebildet sein, die je nach den notwendigen Einbauverhältnissen in ihrer Länge und/oder ihrem Durchmesser unterschiedlich groß hergestellt wird. Durch die unterschiedliche Dimensionierung der Abdeckung des Elektronikraums ist gewährleistet, daß zusätzlich zu einer Standardausführungen des Gehäuses durch die Verwendung unterschiedlich großer Abdeckungen des Elektronikraums auch kundenspezifische Elektronikplatinen eingebaut werden können, wobei die Elektronikplatinen beispielsweise mittels Steckverbindungen montiert werden können, die mit der druckfesten elektrischen Durchführung in der Zwischenwand im Gehäusegrundkörper in Verbindung stehen.

Zweckmäßigerweise wird die den Klemmenraum von dem Elektronikraum dicht trennende druckfeste elektrische Durchführung mit einer Vergußmasse aus Gießharz gebildet. Auf der Seite des Elektronikraums sind die Elektronikplatinen elektrisch leitend mit der druckfesten elektrischen Durchführung verbunden und auf der Seite des Klemmraums besteht eine elektrische Verbindung zu den Klemmen und dem Anschlußelement für das Anzeige- und/oder Bedienelement. Die Verbindungsleitung kann beispielsweise als Zweidrahtleitung ausgeführt sein, die zur Spannungsversorgung und zur Datenübertragung zwischen dem Anzeige- und/oder Bedienelement und den Elektronikplatinen eingesetzt wird.

Bei einem im Gehäuseinneren angeordneten Anzeige- und/oder Bedienelement ist es zweckmäßig, wenn dieses so mit dem Grundkörper verschraubt ist, daß der durch das Anzeige- und/oder Bedienelement abgeschlossene Klemmenraum gemäß der Schutzart IP 30 geschützt ist, damit eine Bedienung bei abgenommener Abdeckung des Klemmenraums ohne einen Begehungsschein zulässig ist. Weiterhin ist es zweckmäßig, wenn das Anzeige- und/oder Bedienelement in der Zündschutzart "Eigensicherheit" ausgeführt ist.

In vorteilhafter Ausgestaltung der Erfindung ist vorgesehen, daS das Anzeige- und/oder Bedienelement außerhalb des Gehäuses angeordnet ist. Durch ein außerhalb des Gehäuses angeordnetes Anzeige- und/oder Bedienelement kann dieses an besser zugänglichen Stellen angeordnet werden, wo es beispielsweise auch geringeren Umgebungseinflüssen ausgesetzt ist. Weiterhin ist es möglich, die Anzeige- und/oder Bedienelemente mehrerer Gehäuse in einer Entfernung zu ihrem Aufstellungsort in einem Leitstand zusammenzufassen.

In besonders vorteilhafter Ausgestaltung der Erfindung ist vorgesehen, daß das Anzeige- und/oder Bedienelement im Klemmenraum angeordnet ist. Durch ein derart angeordnetes Anzeige- und/oder Bedienelement ist gewährleistet, daß dieses aufgrund der mit dem Gehäusegrundkörper verschraubten Abdeckung des Klemmenraums gegen Umgebungseinflüsse geschützt ist. Das im Klemmenraum angeordnete Anzeige- und/oder Bedienelement ist zusätzlich auch gegen die Bedienung durch Unbefugte geschützt, da dieses für einen Bediener erst nach dem Lösen der Abdeckung des Klemmenraums zugänglich ist. Weiterhin ist es auch nicht mehr notwendig den druckfest gekapselten Elektronikraum zu öffenen, welcher bei den bekannten Gehäusen das Anzeige- und/oder Bedienelement enthielt, so daß Verunreinigungen des Elektronikraums vermieden werden.

In weiterer zweckmäßiger Ausgestaltung der Erfindung ist vorgesehen, daß das Anzeige- und/oder Bedienelement mit dem Gehäuse und/oder der Abdeckung verbunden ist.

In vorteilhafter Ausgestaltung der Erfindung ist vorgesehen, daß das Anzeige- und/oder Bedienelement relativ zu dem Gehäuse verdrehbar ist. Hierdurch ist gewährleistet, daß je nach Einbaulage des Gehäuses und den örtlichen Gegebenheiten das Anzeige- und/oder Bedienelement so verdreht werden kann, daß es dem Bediener eine einfache Ablesung der Meßdaten und eine leichte Bedienung der Bedienelemente ermöglicht.

In weiterer zweckmäßiger Ausgestaltung der Erfindung ist vorgesehen, daß die Abdeckung der Klemmen wenigstens ein Fenster aufweist. Das in der Abdeckung der Klemmen vorgesehene Fenster ermöglicht es dem Bediener, die Meßdaten abzulesen, die durch das Anzeigeelement, welches in dem Klemmenraum angeordnet ist, angezeigt werden.

In weiterer zweckmäßiger Ausgestaltung der Erfindung ist vorgesehen, daß wenigstens ein Flansch und eine zugeordnete druckfeste Durchführung für einen Meßwertaufnehmer vorgesehen ist.

Die Erfindung wird anhand schematischer Zeichnungen von Ausführungsbeispielen erläutert. Es zeigen:
- Fig. 1: einen Schnitt durch eine Gehäuse für eine elektrische Schaltung,
- Fig. 2: eine Aufsicht auf den Klemmraum des Gehäuses gemäß Fig. 1,
- Fig. 3: eine Aufsicht auf das Anzeige- und Bedienelement des Gehäuses gemäß Fig. 1,

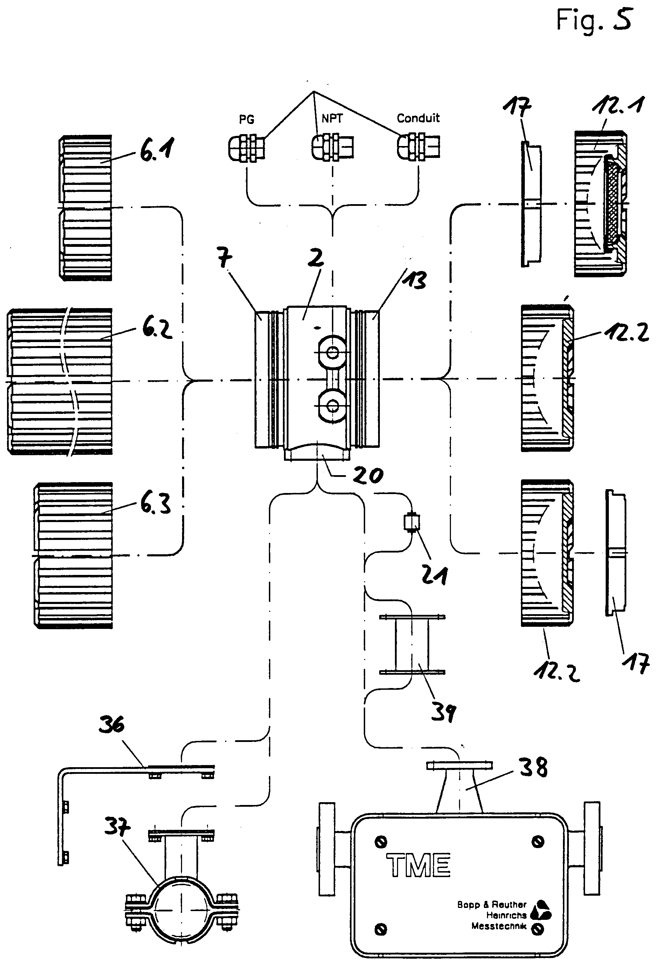

- Fig. 4: einen Schnitt durch das Anzeige- und Bedienelement des Gehäuses gemäß Fig. 1,
- Fig. 5: mehrere Varianten des Gehäuses gemäß Fig. 1

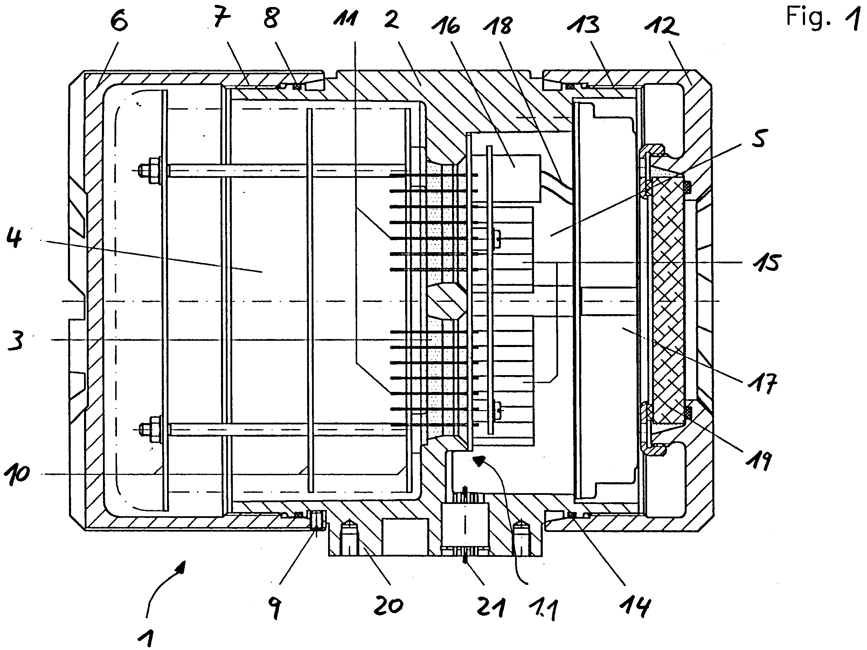

Fig. 1 zeigt ein Gehäuse 1 für den Einsatz in explosionsgefährdeten Bereichen, mit einem Gehäusegrundkörper 2, der durch eine Zwischenwand 1.1 mit einer druckfesten elektrischen Durchführung 3 in einen Elektronikraum 4 und einen Klemmenraum 5 unterteilt ist. Der Elektronikraum 4 ist in der Zündschutzart "druckfeste Kapselung" ausgeführt, während der Klemmenraum 5 in der Zündschutzart "druckfeste Kapselung" oder "erhöhte Sicherheit" ausgeführt sein kann, also beide Räume in ihrer Schutzart unterschiedlich ausgelegt sein können. Der Elektronikraum 4 ist durch die Elektronikraum-Abdeckung 6 über ein Gewinde 7 lösbar mit dem Gehäusegrundkörper 2 verbunden. Zur Abdichtung des Elektronikraums 4 ist zwischen dem Gehäusegrundkörper 2 und der Elektronikraum-Abdeckung 6 ein O-Ring 8 angeordnet. Weiterhin wird ein ungewolltes Lösen der Verschraubung der Elektronikraum-Abdeckung 6 mit dem Gehäusegrundkörper 2 durch eine Sicherheitsschraube 9 verhindert.

In dem Elektronikraum 4 sind Elektronikplatinen 10 angeordnet, die mit der druckfesten elektrischen Durchführung über eine Steckverbindung 11 in Verbindung stehen. Die Steckverbindung 11 ist zur Kontaktierung der Elektronikplatinen 10 mit der druckfesten elektrischen Durchführung 3 verlötet. Die druckfeste elektrische Durchführung 3, die elektrische Leiter aufweist, welche sich von dem Elektronikraum 4 in den Klemmenraum 5 erstrecken, weist beispielsweise ein Gießharzsystem als Vergußmasse auf.

Der Vorteil der zwischen dem Elektronikraum 4 und dem Klemmenraum 5 angeordneten druckfesten elektrischen Durchführung 3 besteht darin, daß diese die beiden Räume sicher voneinander trennt und den Anschluß der Leitungen, die das Anzeige- und/oder Bedienelement mit den Elektronikplatinen verbinden, ermöglicht, so daß der Elektronikraum 4 nicht geöffnet werden muß, wenn das Bedienelement betätigt wird. Hierdurch wird ein Schutz der Elektronikplatinen 10 vor festen, flüssigen oder gasförmigen Verunreinigungen während der Inbetriebnahme, der Wartung und der Bedienung erreicht. Die Steckverbindung 11 hat den Zweck, daS beispielsweise eine fehlerhafte Elektronikplatine 10 schnell ausgetauscht werden kann, in dem die defekte Elektronikplatine 10 einfach herausgezogen und eine neue Elektronikplatine eingesetzt wird.

Der in der Zündschutzart "druckfeste Kapselung" oder "erhöhte Sicherheit" ausgeführte Klemmenraum 5 wird durch die mittels eines Gewindes 13 verschraubte Klemmenraum-Abdeckung 12 verschlossen. Zur Abdichtung des Klemmenraums 5 gegen die Umgebung ist zwischen der Klemmenraum-Abdeckung 12 und dem Gehäusegrundkörper 2 ein O-Ring 14 angeordnet. Die Leitungen der druckfesten elektrischen Durchführung 3 sind einerseits mit einer Klemme 15 und andererseits mit einem Anschlußelement 16 des Anzeige- und Bedienelements 17 verbunden.

Das Anzeige- und Bedienelement 17 ist mit dem Gehäusegrundkörper 2 verschraubt und über eine Verbindungsleitung 18 mit dem Anschlußelement 16 verbunden, wobei die Verbindungsleitung 18 als Zweidrahtleitung ausgebildet sein kann, die zur Spannungsversorgung und Datenübertragung verwendet wird. Zur Ablesung des Anzeigeelements 17 weist die Klemmenraum-Abdeckung 12 ein Fenster 19 mit einer Glasscheibe auf.

Zum Anschluß eines hier nicht näher dargestellten Meßwertaufnehmers weist der Gehäusegrundkörper 2 einen Anschlußflansch 20 auf. Die elektrischen Leitungen des Meßtwertaufnehmers sind mit der druckfesten Durchführung 21, beispielsweise aus Keramik, verbunden, wobei die Leitung der druckfesten Durchführung 21 mit den Klemmen 15 in Verbindung steht. Durch die Verwendung einer druckfesten Durchführung 21 aus Keramik ist gewährleistet, daß der Klemmenraum 5 in der Zündschutzart "druckfeste Kapselung" bei angeflanschtem Meßwertaufnehmer ausgelegt ist. Weiterhin können an dem Gehäuseflansch 20 auch Befestigungselemente zur Montage des Gehäuses 1, beispielsweise an Rohrleitungen, Trägern oder Wänden.

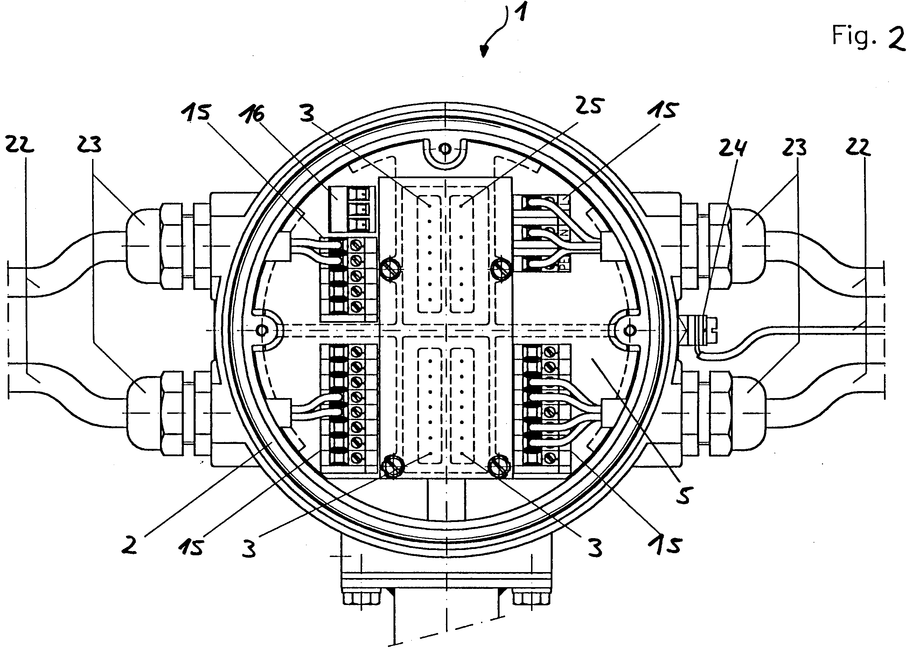

Fig. 2 zeigt eine Aufsicht auf den Klemmenraum 5 des Gehäuses 1. Die elektrischen Leitungen 22 werden durch die Verschraubungen 23 entweder zu den Klemmen 15 oder direkt zu der Schutzleiterklemme 24 geleitet. Für die Verschraubungen 23 werden explosionsgeschützte Verschraubungen verwendet. Um den verfügbaren Klemmenraum 5 gut auszunutzen, ist es zweckmäßig, jeweils zwei paarweise gegenüberliegenden Verschraubungen 23 vorzusehen, denen Klemmen 15 zugeordnet sind. Durch die in einer Ebene liegenden Klemmen 15 ist eine leichte Zugänglichkeit und somit einfache Wartung der in dem Klemmenraum 5 angeordneten Bauelemente gewährleistet. Die Klemmen 15 und das Anschlußelement 16 für die Bedieneinheit sind elektrisch leitend mit der druckfesten elektrischen Durchführung 3 verbunden. Zur Montage des Anzeige- und Bedienelements 17 weist der Gehäusegrundkörper 2 Gewinde 25 auf.

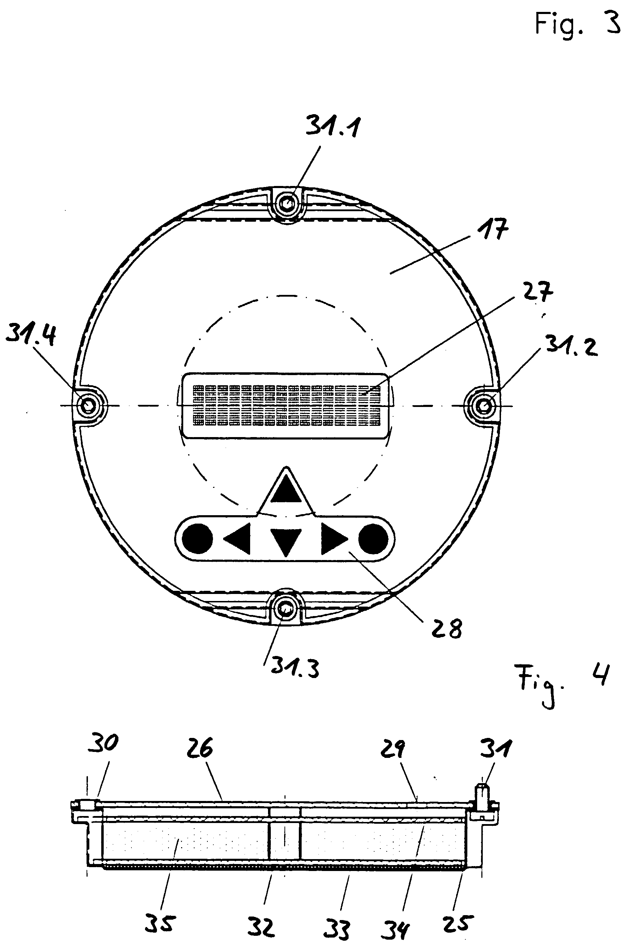

Fig. 3 zeigt einen Schnitt durch das Anzeige- und Bedienelement 17, dessen äußere Form aus der Haube 25 und der Bodenplatte 26 gebildet wird. Die beispielsweise aus einem Aluminiumblech tiefgezogene Haube 25 weist eine Öffnung für das Anzeigeelement 27 und eine Öffnung für das Bedienelement 28 auf. Die Öffnung für das Anzeigelement 27 ist so angeordnet, daß bei aufgeschraubter Klemmenraum-Abdeckung 12 das Ablesen des Anzeigeelementes 27 möglich ist. Die auch aus einem Aluminiumblech gefertigte Bodenplatte 26 weist eine Öffnung 29 zur Durchführung der Verbindungsleitung 18 auf, die dem Anschluß des Anzeige- und Bedienelements 17 an das Anschlußelement 16 dient.

Die Bodenplatte 26 ist mit der Haube 25 mittels Rohrnieten 30 verbunden, durch die Verbindungsschrauben 31 gesteckt werden, um das Anzeige- und Bedienelement 17 mit dem Gehäusegrundkörper 2 über die Gewinde 25 zu verschrauben. Je nach Einbaulage des Gehäuses 1 kann das Anzeige- und Bedienelement 17 relativ zum Gehäuse verdreht werden, wobei der Verdrehwinkel von der Anzahl der möglichen Verbindungselemente abhängt. Zweckmäßig ist es, wenn die Anzeige- und Bedieneinheit 17 wenigstens um 90° relativ zum Gehäuse 1 gedreht werden kann.

Als Schutz gegen eine Bedienung durch Unbefugte kann die Bedieneinheit 17 aus dem Klemmraum 5 herausgenommen werden und nur im Einsatzfall wird diese dann über die Verbindungsleitung 17 mit dem Anschlußelement 16 verbunden. Ferner kann es zweckmäßig sein, wenn die Bedieneinheit 17 außerhalb des Klemmenraums 5 angeordnet ist, wobei dieses beispielsweise mittels der Verbindungsleitung 17, die an das Anschlußelement 16 und mit einer in dem Gehäusegrundkörper 2 vorzusehenden druckfesten keramischen Durchführung 20 verbunden sein könnte. Die Bedienung durch Unbefugte wird auch dadurch erschwert, daß das Tastenfeld 28 der Bedieneinheit 17 nur nach dem Öffnen der Klemmenraum-Abdeckung 12 mit einem Werkzeug möglich ist. Zweckmäßig ist es, daß die Bedienung bei abgenommener Klemmenraum-Abdeckung 12 ohne einen Begehungsschein möglich, da die mit dem Gehäusegrundkörper 2 verschraubte Anzeige- und Bedieneinheit 17 den Klemmenraum in der Schutzart IP 30 (Schutz vor Fremdkörpern > 2,5 mm, kein Wasserschutz) nach EN 60529 schützt.

Unter der Frontseite der Haube 25 ist eine Kunststoffolie 32 mit integriertem Tastenfeld angeordnet. Die Kunststoffolie 32 ist nur im Bereich des Anzeigeelements 27 durchsichtig. Weiterhin liegt die Kunststoffolie 32 auf der Bedienplatine 33 auf, wobei die Bedienplatine 33 mit der Anzeigenplatine 34 verstiftet ist und das Innere der Bedieneinheit 17 mit einer Vergußmasse 35 vergossen ist.

In Zeichnung 5 sind verschiedene Varianten des Gehäuses 1 dargestellt. Je nach dem wie groß der Raumbedarf für die Elektronikplatinen ist, können unterschiedlich große Abdeckungen des Elektronikraums 6.2, 6.2, 6.3 mittels des Gewindes 7 verschraubt werden.

Der Verschluß des Klemmenraums 5 mit der Abdeckung 12 kann in der Zündschutzart "druckfeste Kapselung erfolgen. Hierbei ergibt sich die Variante, daß die Anzeige- und/oder Bedieneinheit 17 in dem Klemmenraum 5 angeordnet ist und von der Abdeckung des Klemmenraums 12.1, welcher eine Glasscheibe 19 aufweist, dicht verschlossen wird. Je nach Kundenwunsch kann die Abdeckung 12.2 auch ohne Fenster 19 ausgeführt sein. Zusätzlich ist es möglich, daß die Anzeige- und/oder Bedieneinheit 17 außerhalb des Gehäuses 1 an einer besser zugänglichen Stelle montiert wird.

Der Flansch 20 kann wahlweise genutzt werden, um eine Halterung zur Wand- oder Trägermontage 36 oder eine Halterung zur Rohrmontage 37 oder einen Meßwertaufnehmer 38 anzuflanschen. Bei angeflanschtem Meßwertaufnehmer 38 kann es notwendig sein, daß mittels eines Distanzstücks 39 der Abstand zwischen dem Gehäuse 1 und dem Meßwertaufnehmer 38 erhöht wird, um falls dies im Hinblick auf den Schutz der Elektronik oder auf den Explosionsschutz erforderlich ist, wenn der Meßwertaufnehmer prozeßbedingt einer hohen Temperatur ausgesetzt ist. Um den Klemmenraum in dr Zündschutzart "druckfeste Kapselung" auszulegen, ist es notwendig, daß der Meßwertaufnehmer 38 über eine keramische Durchführung 21 mit den Klemmen 15 verbunden ist.

## Patentansprüche

1. Gehäuse (1) für eine elektrische Schaltung zum Einsatz in explosionsgefährdeten Bereichen, das durch eine Zwischenwand (1.1) in einen Elektronikraum (4) und einen Klemmenraum (5) unterteilt ist, mit einer lösbar dichten Abdeckung (6) des Elektronikraums und einer lösbar dichten Abdeckung (12) des Klemmenraums und mit einer der Zwischenwand (1.1) zugeordneten druckfesten elektrischen Durchführung (3), die auf der Seite des Elektronikraums (4) mit elektrischen Schaltungen und auf der Seite des Klemmenraums (5) mit Klemmen und wenigstens einem Anschlußelement (16) verbunden ist, wobei das Anschlußelement (16) mit einem Anzeige- und/oder Bedienelement (17) in Verbindung steht.

2. Gehäuse (1) für eine elektrische Schaltung nach Anspruch 1, dadurch gekennzeichnet, daß das Anzeige- und/oder Bedienelement (17) außerhalb des Gehäuses (1) angeordnet ist.

3. Gehäuse (1) für eine elektrische Schaltung nach einem der Ansprüche 1 oder 2, dadurch gekennzeichnet, daß das Anzeigeund/oder Bedienelement (17) im Klemmenraum (5) angeordnet ist.

4. Gehäuse (1) für eine elektrische Schaltung nach einem der Ansprüche 1 bis 3, dadurch gekennzeichnet, daß das Anzeige- und/oder Bedienelement (17) mit dem Gehäuse (1) und/oder der Abdeckung (12) verbunden ist.

5. Gehäuse (1) für eine elektrische Schaltung nach einem der Ansprüche 1 bis 4, dadurch gekennzeichnet, daß das Anzeige- und/oder Bedienelement (17) relativ zu dem Gehäuse (1) verdrehbar ist.

6. Gehäuse (1) für eine elektrische Schaltung nach einem der Ansprüche 1 bis 5, dadurch gekennzeichnet, daß die Abdeckung (12) der Klemmen (15) wenigstens ein Fenster (19) aufweist.

7. Gehäuse (1) für elektrische Schaltungen nach einem der Ansprüche 1 bis 6, dadurch gekennzeichnet, daß wenigstens ein Flansch (20) und eine zugeordnete druckfeste Durchführung (21) für einen Meßwertaufnehmer vorgesehen ist.
